**Europäisches Patentamt**

**European Patent Office**

**Office européen des brevets**

(19)

(11) Veröffentlichungsnummer : **0 353 510 B1**

(12) **EUROPÄISCHE PATENTSCHRIFT**

(45) Veröffentlichungstag der Patentschrift :
**16.09.92 Patentblatt 92/38**

(51) Int. Cl.⁵ : **A47G 19/12,** A47J 45/06,
B28B 11/02

(21) Anmeldenummer : **89112803.5**

(22) Anmeldetag : **13.07.89**

(54) **Griffelement und Verfahren zum Ankleben des Griffelements an einem Geschirrteil.**

(30) Priorität : **03.08.88 DE 3826314**

(43) Veröffentlichungstag der Anmeldung :
**07.02.90 Patentblatt 90/06**

(45) Bekanntmachung des Hinweises auf die
Patenterteilung :
**16.09.92 Patentblatt 92/38**

(84) Benannte Vertragsstaaten :
**CH DE FR GB IT LI NL SE**

(56) Entgegenhaltungen :
**DE-A- 3 048 783**
**FR-A- 1 526 119**

(73) Patentinhaber : **Schott Glaswerke**
**Hattenbergstrasse 10**
**W-6500 Mainz 1 (DE)**

(84) **CH DE FR IT LI NL SE**
Patentinhaber : **Carl-Zeiss-Stiftung trading as**
**SCHOTT GLASWERKE**
**Hattenbergstrasse 10**
**W-6500 Mainz 1 (DE)**

(84) **GB**

(72) Erfinder : **Kramer, Walter**
**Westring 285**
**W-6500 Mainz (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

EP 0 353 510 B1

EP 0 353 510 B1

## Beschreibung

Die Erfindung betrifft ein Verfahren ein Griffelement und zum Ankleben des Griffelementes an einem Geschirrteil.

Griffelemente wie Griffe, Knöpfe, Henkel, etc. bestehen in der Regel aus Kunststoff und werden meist mit Metall-Konstruktionsteilen wie Spannbändern, Scheiben und Schrauben an einem Geschirrteil befestigt.

Ist das Geschirrteil vornehmlich Töpfe, Pfannen, Deckel, Krüge, Kannen, etc. aus Glas, Glaskeramik, Keramik, Porzellan, glasiertem Ton oder ähnlichem, für die Verwendung im Mikrowellenherd bestimmt, so dürfen keine Metallteile für die Befestigung des Griffelements verwendet werden. Die Verbindung des Griffelementes mit dem Geschirrteil erfolgt dann vorzugsweise durch Ankleben. Der dafür verwendete Klebstoff muß den im Küchenbetrieb vorkommenden Anforderungen genügen:
– er muß sowohl mit dem Griffelement als auch mit dem Geschirrteil eine festhaftende Verbindung eingehen;
– er muß ausreichend elastisch sein, um die hohe Differenz der Ausdehnungskoeffizienten auszugleichen. So hat zum Beispiel Glas einen Ausdehnungskoeffizienten von $3,3 \times 10^{-6}$/K und Kunststoff von $80 \times 10^{-6}$/K;
– er muß temperaturbeständig bis ca. 280°C sein;
– er muß eine ausreichend hohe Zerreißfestigkeit aufweisen;
– er muß beständig gegen Säuren und Laugen sein;
– und er muß lebensmittelecht sein.

Entsprechende Klebstoffe sind hochviskos und nicht fließfähig.

Klebeverbindungen zwischen einem Krug aus Glas oder Keramik und einem Griff aus Kunststoff sind aus den DE-PS'en 30 48 783 und 3l 09 759 bekannt. Dort wird eine definierte Klebstoffmenge auf den Griff oder den Krug aufgetragen und werden die beiden zu verklebenden Teile zusammengefügt. Der Klebstoff fließt hierbei durch Löcher im Griff und kann auf der der Klebestelle abgewandten Seite Verdickungen bilden, so daß der Griff auch formschlüssig vom Klebstoff gehalten wird. Klebstoffe für solche Klebstoffverbindungen dürfen jedoch nicht hochviskos sein, da sonst die formschlüssige Verbindung am Griff nicht zustande kommt. Die beschriebenen Kunststoff-/Glasverklebungen sind außerdem nur bis ca. l00°C temperaturfest.

Aus der FR-A-l 526 ll9 ist ein Verfahren bekannt, Elemente, welche kleine Kontaktflächen miteinander bilden, mittels Mehrkomponentenklebern sehr kurzer Reaktionszeit fest aneinander zu heften. An den Kontaktflächen werden durch Aussparungen in einem Teil Klebefugen erhalten, in welche über ein oder mehrere Kanäle mittels Dosierungsdüsen die einzelnen Komponenten des Mehrkomponentenklebers eingetragen werden können. Die Durchmischung der Einzelkomponenten zum Aushärten erfolgt entweder direkt in den Klebefugen oder in vorgeschalteten Mischkammern, welche mit den Klebefugen über kurze Kanäle verbunden sind. Das Aushärten erfolgt vorzugsweise in der Wärme. Da aber die einzelnen Komponenten ansich chemische Reaktanten darstellen, mithin also in den meisten Fällen toxisch sind, ist die Verwendung solcher Mehrkomponentenkleber bei Geschirrteilen nicht unproblematisch. Hierbei müßten nämlich höchste Anforderungen an die Dosierung mit eng definierten Mengenverhältnissen bei gleichzeitig optimaler Durchmischung während der kurzen Reaktionszeit der Einzelkomponenten gestellt werden, da bei nur geringfügigem Überschuß einer Komponente oder bei ungleichmäßiger Durchmischung die hohen Anforderungen an Lebensmittelechtheit nicht gewährleistet wären.

Der Erfindung liegt die Aufgabe zugrunde, ein Verfahren zum Ankleben eines Griffelements an einem Geschirrteil zu schaffen, das die oben ausgeführten Bedingungen erfüllt und die Nachteile des Standes der Technik vermeidet.

Diese Aufgabe wird in Bezug auf die Ausgestaltung des Griffelements gemäß den kennzeichnenden Merkmalen des Anspruchs l und in Bezug auf das Anklebeverfahren gemäß den kennzeichnenden Merkmalen des Anspruchs 7 gelöst.

Durch dieses Verfahren kann auch hochviskoser Klebstoff an die gesamte Klebefläche gebracht werden. Bei dieser Aufbringung des Kunststoffes durch Einspritzen unter Druck kann auch ein thixotropes Verhalten des Klebstoffes ausgenutzt werden, wobei der Klebstoff während des Einspritzens eine niedrige Viskosität annimmt und sich somit besser auf den Klebeflächen verteilt. Beim Auftragen des Klebstoffes wie im Stand der Technik beschrieben, kann das thixotrope Verhalten nicht oder nur ungenügend ausgenutzt werden.

Bei dem gewinkelten Verlauf des Kanals, durch den der Klebstoff gespritzt wird, erhält man nach Aushärtung des Klebstoffes eine formschlüssige Verbindung des Klebstoffes am Griffelement, wodurch auch mit an Kunststoffen weniger gut haftenden Klebstoffen ein dauerhafte und feste Verbindung des Klebstoffes am Griffelement erreicht wird. Zu dem selben Zweck sind an der Klebefläche des Griffelementes eine oder mehrere hinterschnittene Rinnen eingelassen. Zusätzlich erhält man eine vergrößerte Kontaktfläche des Griffelementes zum Klebstoff und dadurch eine stabilere Klebeverbindung.

Im folgenden wird eine beispielhafte Ausführungsform anhand von Zeichnungen näher erläutert.

2

Es zeigen:

Figur 1 Einspritzen eines Klebstoffes in einen Knopf;

Figur 2 eine fertige Klebeverbindung des Knopfes auf einem Glasdeckel;

Figur 3 Klebefläche des Knopfes.

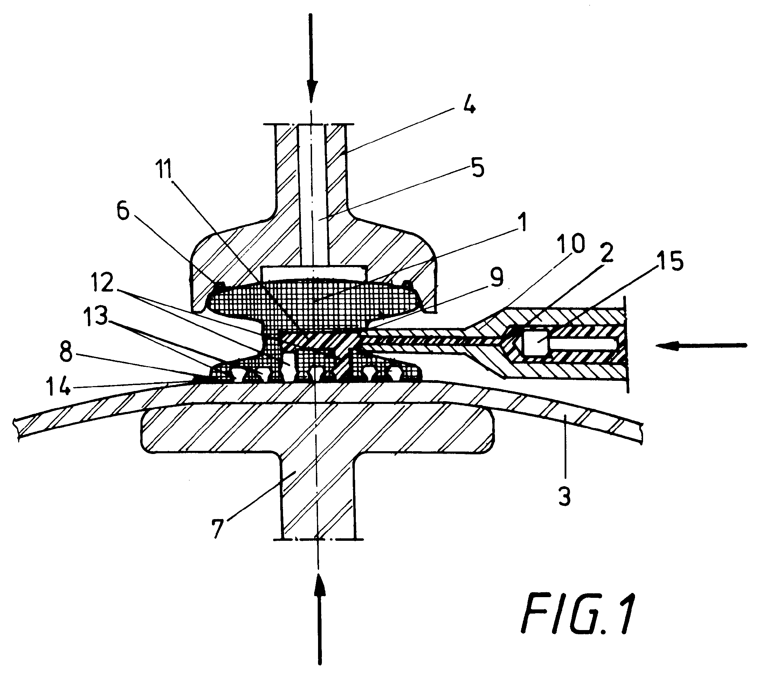

Figur 1 zeigt das erfindungsgemäße Verfahren anhand eines Knopfes 1, der mittels eines Klebstoffes 2 auf einem Glasdeckel 3 befestigt wird. Der Knopf 1 wird hierbei in einem Gegenhalter 4, der als Vakuumknopffutter ausgebildet ist, gehalten. Das Halten des Knopfes 1 am Gegenhalter 4 erfolgt durch Beaufschlagen des Innenraumes 5 im Gegenhalter 4 mit Unterdruck, wobei für rauhe Knopfoberflächen ein O-Ring 6 zur Abdichtung dient. Auf einem zweiten Gegenhalter 7 liegt der Glasdeckel 3. Dieser zweite Gegenhalter 7 ist so geformt, daß der Glasdeckel 3 beim Auflegen zentriert wird.

Die beiden Gegenhalter 4 und 7 werden in Pfeilrichtung gegeneinander gepreßt, so daß der Knopf 1 mit seinem ringförmigen Rand 8 fest auf den Glasdeckel 3 gedrückt wird.

An eine sich nach außen konisch erweiternde Öffnung 9 des Knopfes wird in Pfeilrichtung eine Dosier- Klebstoffdüse 10 gedrückt und Klebstoff 2 durch diese Dosier-Klebstoffdüse 10 in einen Querkanal 11 gepreßt. Der Klebstoff 2 gelangt weiter über Steiglöcher 12 an den Glasdeckel 3 und wird weiter zwischen Glasdeckel 3 und Knopf 1 bis zum Rand 8 des Knopfes 1 gedrückt, wobei auch hinterschnittene Ringkanäle 13 mit dem Klebstoff 2 gefüllt werden. Die durch den Klebstoff 2 verdrängte Luft entweicht durch Entlüftungsschlitze 14, die in den Rand 8 eingelassen sind. Die Entlüftungsschlitze 14 weisen bei einer vorteilhaften Ausführungsform eine Höhe von $\leq 0,2$ mm auf, so daß kein Klebstoff 2 durch sie gepreßt werden kann. Sobald sich kein Klebstoff 2 mehr in den Querkanal 11 pressen läßt, wird die Dosier-Klebstoffdüse 10 entgegen der Pfeilrichtung zurückgezogen und mittels eines Stempels 15 verschlossen. Der Verschließvorgang kann so gesteuert werden, daß die Öffnung 9 beim Zurückziehen der Dosier-Klebstoffdüse 10 noch mit Klebstoff 2 gefüllt wird, so daß ein glatter Verschluß der Öffnung 9 erreicht wird.

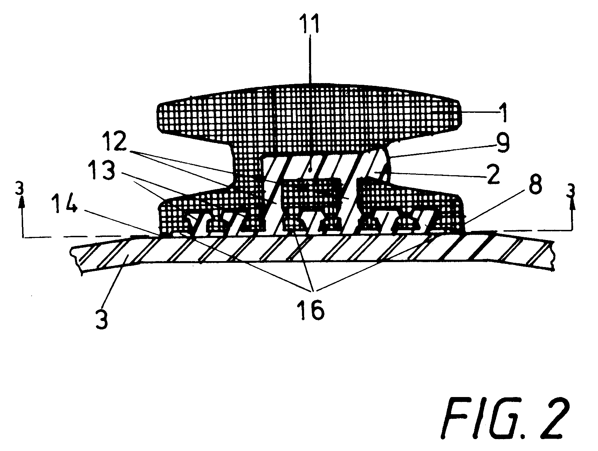

Figur 2 zeigt den mit Klebstoff 2 vollgepreßten Knopf 1. Der Klebstoff 2 füllt die Öffnung 9, den Querkanal 11, die Steiglöcher 1 sowie die hinterschnittenen Ringkanäle 13 aus und bildet dadurch eine formschlüssige Verbindung mit dem Knopf 1. Glasseitig ist der Klebstoff 2 über die gesamte Klebefläche 16, die durch den Rand 8 begrenzt wird, verteilt und haftet am Glasdeckel 3 durch Adhäsion.

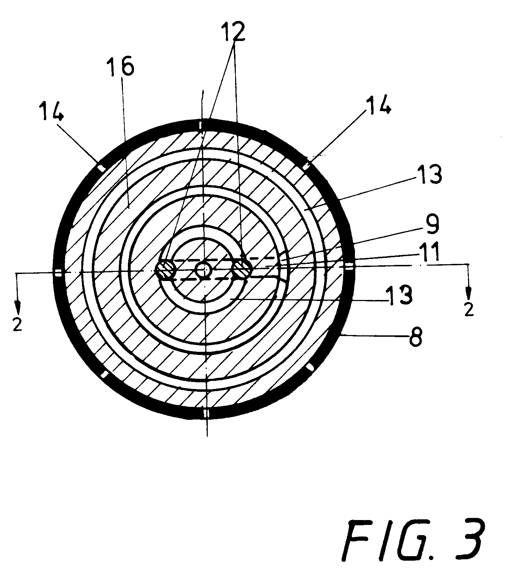

Figur 3 zeigt die Klebefläche 16 des Knopfes 1 entlang der Linie III-III in Figur 2. Der Klebstoff gelangt durch die Öffnung 9, den Querkanal 11 und die Steiglöcher 12 in einen der hinterschittenen Ringkanäle 13 und verteilt sich von dort über die Klebefläche 16 und die weiteren Ringkanäle 13 bis zum Rand 8. Eine genügende Anzahl von Entlüftungsschlitzen 14, über den Rand 8 verteilt, ermöglicht ein Entweichen der sich zwischen der Klebefläche 16 und dem Glasdeckel 3 befindenden Luft und somit ein blasenfreie Klebefläche 16, so daß der Raum zwischen der Klebefläche 16 und dem Glasdeckel 3 vollständig mit Klebstoff 2 gefüllt wird.

Bei Verwendung eines bis 280°C temperaturbeständigen Klebstoffes erhält man ein für Mikrowellenöfen und Backöfen geeignetes Geschirr.

**Patentansprüche**

I. Griffelement zum Ankleben an einem Geschirrteil, dadurch gekennzeichnet, daß das Griffelement (I) mindestens einen zum Anschluß einer Düse (I0) seitlich einmündenden Kanal (II) und Entlüftungsschlitze (14) umfaßt, wobei dieser Kanal (II) zur Ausbildung einer formschlüssigen Verbindung des ausgehärteten Klebstoffs (2) mit dem Griffelement (I) einen in Richtung auf das Geschirrteil (3) abgewinkelten Verlauf aufweist und ein in Richtung auf das Geschirrteil überstehender und auf dem Geschirrteil aufsitzender Rand (8) an der Unter- seite des Griffelements (I) eine Klebefläche (I6) so begrenzt, daß zwischen Klebefläche (I6) und Geschirrteil (3) zur Aufnahme von Klebstoff ein freier Raum ausgebildet wird, wobei in diese Klebfläche des Griffelements eine oder mehrere mit dem Kanal (II) über Steiglöcher (I2) in Verbindung stehende hinterschnittene Rinnen (I3) eingelassen sind.

2. Griffelement nach Anspruch I, dadurch gekennzeichnet, daß die hinterschnittenen Rinnen in der Klebefläche des Griffelements einen ringförmigen Verlauf aufweisen.

3. Griffelement nach Anspruch I, dadurch gekennzeichnet, daß es eine einen spiralförmigen Verlauf aufweisende hinterschnittene Rinne umfaßt.

4. Griffelement nach jedem der vorhergehenden Ansprüche, dadurch gekennzeichnet, daß es aus einem für Mikrowellen-Öfen geeigneten Material besteht.

5. Griffelement gemäß jedem der vorhergehenden Ansprüche, dadurch gekennzeichnet, daß die Entlüftungsschlitze (14) am Rand (8) der Klebefläche (16) zum Entweichen der von dem eingepreßten Klebstoff verdrängten Luft vorgesehen sind.

6. Griffelement nach Anspruch 5, dadurch gekennzeichnet, daß die Entlüftungschlitze eine maximale Höhe von 0,2 mm aufweisen.

7. Verfahren zum Ankleben eines Griffelements gemäß Anspruch I, dadurch gekennzeichnet, daß das Griffelement mit dem überstehenden Rand mittels Gegenhaltern an die vorgesehene Anklebestelle des Geschirrteils gepreßt wird, der Klebstoff mittels einer Düse in den seitlich in das Griffelement einmündenden Kanal und über die Steiglöcher in den Raum zwischen Klebfläche des Griffelements und Oberfläche des Geschirrteils sowie in die hinterschnittenen Rinnen gepreßt und dort gleichmäßig verteilt wird, wobei die von dem Klebstoff verdrängte Luft über Entlüftungsschlitze entweicht und sobald sich kein Klebstoff mehr in den Querkanal pressen läßt, die Düse von der Einlaßöffnung des Kanals entfernt und nach Aushärten des Klebstoffs die Gegenhalter vom Druck entlastet und entfernt werden.

8. Verfahren nach Anspruch 7, dadurch gekennzeichnet, daß ein Klebstoff mit hoher Viskosität verwendet wird.

9. Verfahren nach Anspruch 7, dadurch gekennzeichnet, daß ein thixotroper Klebstoff verwendet wird.

I0. Verfahren nach den Ansprüchen 7-9, dadurch gekennzeichnet, daß die Haftung des Klebstoffs am Geschirrteil mittels Adhäsion erfolgt.

II. Verfahren nach den Ansprüchen 7-9, dadurch gekennzeichnet, daß die Haftung des Griffelements mittels Adhäsion des Klebstoffs und Formschluß des gehärteten Klebstoffs über die hinterschnittenen Rinnen erfolgt.

I2. Geschirrteil mit angeklebtem Griffelement gemäß Anspruch I.

## Claims

1. Handle element for affixing to a kitchenware part, characterized in that the handle element (1) has at least one channel (11) opening laterally for the connection of a nozzle (10) and has air vent slots (14), this channel (11), for providing a form-fit connection of the cured adhesive (2) to the handle element (1), having a profile which is angled off in the direction of the kitchenware part (3) and an edge (8) which projects in the direction of the kitchenware part and is seated on the kitchenware part delimiting an adhesive surface (16) at the underside of the handle element (1) such that a free space is formed between adhesive surface (16) and kitchenware part (3) for receiving adhesive, there being made in this adhesive surface of the handle element one or more undercut grooves (13) connected to the channel (11) by way of vertical holes (12).

2. Handle element according to Claim 1, characterized in that the undercut grooves in the adhesive surface of the handle element have an annular profile.

3. Handle element according to Claim 1, characterized in that it has an undercut groove having a spiral-shaped profile.

4. Handle element according to any one of the preceding claims, characterized in that it is of a material suitable for microwave ovens.

5. Handle element according to any one of the preceding claims, characterized in that the air vent slots (14) are provided at the edge (8) of the adhesive surface (16) for the air displaced by the pressed-in adhesive to escape.

6. Handle element according to Claim 5, characterized in that the air vent slots have a maximum height of 0.2 mm.

7. Method of affixing a handle element according to Claim 1, characterized in that the handle element is pressed by means of the projecting edge against the provided affixing point of the kitchenware part by means of contact holders, in that the adhesive is pressed by means of a nozzle into the channel opening laterally into the handle element and is pressed via the vertical holes into the space between adhesive surface of the handle element and surface of the kitchenware part and is also pressed into the undercut grooves and distributed uniformly therein, the air displaced by the adhesive escaping via air vent slots, and as soon as no more adhesive can be pressed into the transverse channel the nozzle is removed from the inlet opening of the channel, and after the adhesive has cured the contact holders are released from pressure and removed.

8. Method according to Claim 7, characterized in that an adhesive having a high viscosity is used.

9. Method according to Claim 7, characterized in that a thixotropic adhesive is used.

10. Method according to Claims 7-9, characterized in that the bonding of the adhesive to the kitchenware part is effected by means of adhesion.

11. Method according to Claims 7-9, characterized in that the bonding of the handle element by means of adhesion of the adhesive and form fit of the cured adhesive is effected via the undercut grooves.

12. Kitchenware part having an affixed handle element according to Claim 1.

## Revendications

1. Poignée destinée à être collée sur une pièce de vaisselle, caractérisée par le fait que la poignée (1) comporte au moins un conduit (11) qui débouche latéralement pour le raccordement d'une buse (10) et des fentes d'aération (14), ledit conduit (11) étant coudé en direction de la pièce de vaisselle (3) afin de réaliser une liaison par conjugaison de forme entre la colle (2) durcie et la poignée (1), un rebord (8) qui fait saillie en direction de la pièce de vaisselle et vient en contact avec celle-ci délimitant une surface de collage (16) sur la face inférieure de la poignée (1) de manière à former, entre la surface de collage (16) et la pièce de vaisselle (3), un espace libre destiné à recevoir la colle, une ou plusieurs rainures (13) en contre-dépouille qui communiquent avec le conduit (11) par l'intermédiaire d'orifices de refoulement (12) étant aménagées dans la surface de collage de la poignée.

2. Poignée selon la revendication 1, caractérisée par le fait que les rainures en contre-dépouille aménagées dans la surface de collage de la poignée ont une forme d'anneau.

3. Poignée selon la revendication 1, caractérisée par le fait qu'elle comporte une rainure en contre-dépouille en forme de spirale.

4. Poignée selon l'une des revendications précédentes, caractérisée par le fait qu'elle est réalisée en un matériau adapté pour les fours à micro-ondes.

5. Poignée selon l'une des revendications précédentes, caractérisée par le fait que les fentes d'aération (14) sont prévues dans le rebord (8) de la surface de collage (16) afin de permettre l'évacuation de l'air refoulé par la colle injectée.

6. Poignée selon la revendication 5, caractérisée par le fait que les fentes d'aération ont une hauteur maximale de 0,2 mm.

7. Procédé de collage d'une poignée selon la revendication 1, caractérisé par le fait qu'on applique fermement, au moyen d'éléments presseurs, la poignée avec son rebord en saillie à l'endroit prévu pour le collage sur la pièce de vaisselle, à l'aide d'une buse, on injecte la colle dans le conduit débouchant latéralement dans la poignée et, à travers les orifices de refoulement, dans l'espace formé entre la surface de collage et la surface de la pièce de vaisselle ainsi que dans les rainures en contre-dépuoille où la colle est uniformément répartie, l'air refoulé par la colle s'échappant par les fentes d'aération, dès qu'on ne peut plus injecter de colle dans le conduit transversal, on éloigne la buse de l'orifice du conduit transversal puis, lorsque la colle est durcie, on relâche la pression des éléments presseurs et on retire ceux-ci.

8. Procédé selon la revendication 7, caractérisé par le fait qu'on utilise une colle à viscosité élevée.

9. Procédé selon la revendication 7, caractérisé par le fait qu'on utilise une colle thixotrope.

10. Procédé selon les revendications 7 à 9, caractérisé par le fait que l'adhérence de la colle sur la pièce de vaisselle a lieu uniquement par adhésion.

11. Procédé selon les revendications 7 - 9, caractérisé par le fait que l'adhérence de la poignée a lieu par adhésion de la colle et par conjugaison de formes de la colle durcie dans les rainures en contre-dépouille.

12. Pièce de vaisselle munie d'une poignée collée selon la revendication 1.

FIG.1

EP 0 353 510 B1

FIG. 2

FIG. 3